# EUROPEAN PATENT APPLICATION

(11) **EP 1 108 753 A2**
(43) Date of publication of application: **20.06.2001**
(21) Application number: 00403499.7
(22) Date of filing: 13.12.2000
(51) Int. Cl.: C08L 101/00, C08L 67/02, C08L 77/00, B29C 59/00, B29D 9/00, B32B 27/00

(54) **Thermoplastic embossing materials and methods**

(30) Priority: 14.12.1999 US 460802
(71) Applicant: Bostik Inc., Middleton, MA 01949 (US)
(72) Inventor: Berger, Christopher S., Malden, MA 02148 (US); Warren, Tom, Peabody, MA 01960 (US); Rossitto, Conrad, Naples, Florida 34104 (US)
(74) Representative: Ohresser, François

(57) **Abstract**

The present invention provides embossing film compositions particularly useful in producing materials for coating aircraft interiors and methods and articles of manufacture comprising these compositions. The composition of the present invention is particularly advantageous in that it is capable being laminated and embossed within about 2 minutes, as opposed to the present process times of about 15 - 20 minutes. It is also capable of being laminated and embossed in a continuous process.

## Description

### FIELD OF THE INVENTION

The present invention relates to novel thermoplastic embossing films useful to produce decorative laminates, novel methods employing such materials and articles of manufacture that comprise such compositions.

### BACKGROUND OF THE INVENTION

Decorative laminates are commonly employed in the fabrication of commercial aircraft interiors. Decorative laminates often comprise screen printed materials which are applied to many interior surfaces of passenger aircraft for purposes of decoration and for reducing the glare of light reflected off of the surfaces. These materials have been produced by lamination of a curing adhesive film and a protective support layer, typically a polyvinyl fluoride film such as Tedlar® available from E.I. du Pont de Nemours & Co. The laminate is then embossed to provide a decorative pattern. Thereafter, the embossed laminate is formed into shaped panels which conform to the desired shape of the interior of the aircraft by a thermoforming operation. The adhesive film preserves the embossed texture imparted to the Tedlar® during the thermoforming operation and can provide flame retardant properties to the formed laminate article. "Double" decorative laminates also are used in aircraft interiors and are formed by laminating a curing adhesive film to a support layer such as Tedlar® and then placing another support layer over the adhesive layer. The three layer stack of materials is then laminated and embossed.

In the past, decorative laminates have been fabricated in a batch-type of lamination and embossing process, using thermosetting adhesives. More particularly, a "sandwich" of materials is prepared in a stack and placed within a heated embossing press which applies pressure and temperature to the stationary stack for a period of time. The sandwich of materials typically includes, in succession, a 2 mil Tedlar® sheet, a sheet of thermoset film and a textured fiberglass sheet that transfers decorative imprint texture to the adhesive film/Tedlar® layers under the embossing conditions. The adhesive film is typically first cast onto release paper. The release paper is then removed and discarded as waste during assembly of the stack of materials. This sandwich is then placed on the heated embossing press, often with other stacks of textured blanket, adhesive film, and Tedlar® sheet. The heat and pressure applied by the embossing press has to be sufficient to cause the adhesive film to adhere to the Tedlar® sheet, the pattern of the textured blanket to be imprinted into the laminate and the thermosetting adhesive layer to cure. Conditions of such lamination and embossing have included pressures of about 100 psi and temperatures of about 320°F for between 10 and 20 minutes.

The thus formed laminate with the decorative patterned surface can be affixed to shaped panels which form the interior surface of an aircraft, in a thermoforming operation, using an adhesive, such as Bostik 7132, a sprayable liquid, Bostik 319 film, a fire retardant thermoplastic film, or Bostik 576 film, a fire retardant pressure sensitive film. The embossed laminate is typically adhered to the panel substrate by a vacuum-forming application. During the vacuum forming operation, the Tedlar®/adhesive/ embossing film laminate is subjected to temperatures high enough to soften the laminate, which conforms and bonds to the substrate. In the vacuum-forming application, the formed decorative laminate is typically exposed to temperatures of up to about 280°F. See. e.g., U.S. Patent No. 4,788,091.

While this process can produce a suitable laminated product, the extended residence times of the layered sheets in the embossing press during lamination and embossing effectively limits through-put and can add to manufacturing costs. Further, during the vacuum forming process, these films are often unable to retain the embossed decorative patterned surface, especially if the thermosetting adhesive layer is not sufficiently cured when subjected to the temperatures of the vacuum forming operation. In particular, these films tend to lose the embossing in areas where the laminate is stretched to conform to deep draw in the panel substrate. Still further, conventional thermosetting adhesive films are generally made from solvent solutions, which may be harmful to the environment.

There is a need for compositions that may be used as an embossing film in the formation of decorative laminates such as those used in the fabrication of aircraft interiors. Additionally, there is a need for such compositions that may be embossed at lower temperatures and/or shorter times than current compositions. Further needed are such compositions that are able to retain an embossed texture during a subsequent vacuum forming process. It would further be desirable that such compositions be made by a solvent free process.

### SUMMARY OF THE INVENTION

The present invention provides a thermoplastic embossing film composition particularly suitable for the fabrication of decorative laminates for aircraft interiors, and an improved process for manufacturing such decorative laminates. The decorative laminates are generally manufactured as follows: (1) a "sandwich" of materials is formed, including, in succession, a support sheet, a sheet of the thermoplastic embossing film composition, and a textured embossing sheet. The embossing film may be cast onto release paper, which is removed and discarded as waste during assembly of the stack of materials; (2) the sandwich is placed in a heated embossing press which applies pressure and increased temperatures to the stationary stack for a period of time, or, alternatively, the sandwich is passed through a continuous embossing apparatus in which case the textured surface may be imparted to the laminate by a textured nip roll; (3) the heat and pressure applied by the embossing apparatus causes the embossing film to adhere to the support sheet and the pattern of the textured embossing sheet to be imprinted into the laminate; (4) the formed laminate with the decorative textured surface is affixed to a surface by a vacuum-forming application wherein the support sheet/ embossing film laminate is subjected to temperatures high enough to soften the laminate, which conforms and bonds to the substrate, yet retaining its textured appearance.

The present invention provides an embossing film composition that is capable of being applied within shorter periods of time than prior thermoset adhesive film compositions. While prior thermoset adhesive film compositions must be cured, a process which typically takes from about 15 to 20 minutes, the present embossing film composition does not require curing and is capable of being applied and embossed within about 2 minutes, and therefore, can be embossed and laminated by a batch process or by a continuous process.

Further, the embossing film composition of the present invention is better able to retain the decorative textured surface during vacuum forming procedures. While the embossing compositions of the present invention melt in the embossing procedure, it does not melt in the vacuum forming procedure. Thus, the textured surface formed during the embossing procedure is not lost during the subsequent vacuum forming procedure.

In one embodiment, the embossing composition comprises a blend of two fast crystallizing polymers which can be embossed in a short time and which can retain the emboss during vacuum forming. For example, blends of polyesters, polyamides, polyurethanes, polyvinylchlorides (PVC), acrylics, polyvinylidene chloride, polycarbonates and polyoxymethylenes may be used. The polymers may be homopolymers, block copolymers or random copolymers. Preferably, the melting point of the polymer blend is such that the blend is meltable in the embossing process, but not in the vacuum forming process. It has been found that, by utilizing a blend of thermoplastic polymers wherein each polymer's melting point is similar to the support film, preferably either Tedlar® or Kynar®, and wherein one polymer has a higher melting point than the other polymer, retention of the textured surface is improved. Without being bound by theory, it is believed that in the vacuum forming process, the higher melting point polymer does not decrystalize, while the lower melting point polymer elongates and carries crystalline material with it, thereby leading to better retention of the textured surface in the vacuum forming process.

In one preferred embodiment, a blend of block co-polyesters is used. More particularly, a blend of two fast crystallizing polyesters, namely Hytrel 5556 and Hytrel 4056, available from E. I. du Pont de Nemours, is used. Preferably, the percentage of Hytrel 5556 is about 85-10 % and the percent of Hytrel 4056 is about 15-90% by weight.

In another preferred embodiment, a blend of two block polyamides is used. More particularly, a blend of PEBAX polymers, such as PEBAX 5533 and PEBAX 4053, available from Elf Atochem, is used. Preferably, the percentage of PEBAX 5533 is about 10 - 85% and the percentage of PEBAX 4053 is about 15 - 90% by weight.

In addition to the above composition, a fire retardant material or blend may be added so that the laminate meets and exceeds the FAA regulations for heat release and smoke density values. Any known fire retardant blend may be used. Particularly useful in the present invention is a blend of zinc borate, decabromodiphenyl oxide (Great Lakes DE83) and another brominated compound having a melt point such that it is meltable in the extrusion process but solid in the vacuum forming process. For example, Great Lakes BC52 (a tetrabromobisphenol A polycarbonate) and Great Lakes DE79 (Octobromodiphenyl Oxide) are two such compounds. Without being bound by theory, it is believed that the third ingredient in the fire retardant blend (i.e. the other brominated compound) lowers the viscosity of the melt blend in the embossing process, while maintaining stiffness in the solid form in the vacuum forming process, thereby aiding in the retention of the textured laminate surface. Further, as an alternative to zinc borate, aluminum trihydrate may be used at lower processing temperatures. Preferably, the film compositions are loaded with about 60-70% fire retardant agents.

In addition to the above composition, a primer may be utilized to enhance the binding of the embossing composition to the support film. Preferably, a primer layer is added where Tedlar® is used as a support layer. Preferably, the primer is used by coating the Tedlar® support film with the primer. For example, a primer blend of phenoxy resin, a thermoplastic, solvent soluble polyurethane and an isocyanate (blocked or not blocked) has been found particularly useful in the present composition wherein the support film is Tedlar®. More specifically, Bostik S943-34 may be used as the polyurethane in the phenoxy/urethane blend, while Bayer's LS2800 or BL3175 may be used as the isocyanate. The curing primer, in addition to allowing the polyester to bond to the Tedlar® support film, has also been found to increase the retention of the textured surface during the vacuum forming process.

The present invention also provides methods for the formation of a decorative laminate, using the embossing film composition of the present invention, through either a batch-type process or a continuous lamination and embossing process.

### BRIEF DESCRIPTION OF THE DRAWINGS

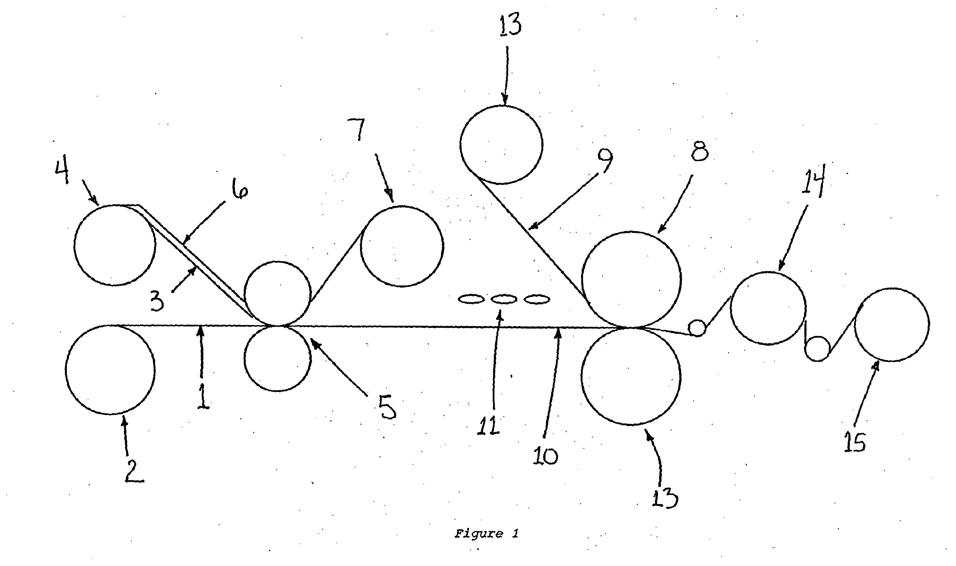

FIG. 1 shows a schematic of a continuous lamination/emboss machine.

### DETAILED DESCRIPTION OF THE INVENTION

The embossing film compositions of the present invention comprise, in general, a polymer or blend of polymers characterized in that the polymer(s) have a melting point similar to the support layer to which the embossing film composition is laminated. More particularly, the polymer or blend of polymers is characterized in that the polymer or polymer blend is (1) softenable during lamination and embossing processes, carried out at pressures of about 100 psi and temperatures of about 280-360°F and (2) remains solid during vacuum forming processes wherein the composition is exposed to temperatures of up to about 280°F.

More specifically, the polymer blend may comprise, for example, any blend of thermoplastics, including, for example, polyesters, polyamides, polyurethanes, polyvinylchloride (PVC), polycarbonate, polyoxymethylene, acrylics and polyvinylidene chloride. The polymers may be random or block copolymers. These blends may be derived from any combination of the materials listed above, or a single polymer that is made up of a soft and a hard segment, or a single polymer that has an appropriate softening point and heat deflection temperature.

Most preferably, a blend of two fast crystallizing polyesters, namely Hytrel 5556 and Hytrel 4056, or a blend of polyamides, preferably PEBAX 4033 and PEBAX 5533, is used. Where the polyesters are used, the percentage of Hytrel 5556 to 4056 is preferably about 10%-85% Hytrel 5556 to about 15%-90% Hytrel 4056 by weight. This blend is characterized in that the two polyesters are highly viscous and they each have a very different flexural modulus.

Where the polyamides are used, the percentage of PEBAX 5533 is about 15% - 90% and the percentage of PEBAX 4053 is about 10% - 85% by weight. This blend is characterized in that the two components have substantially different heat deflection temperatures.

The properties of the polyesters are as follows:

| | Hytrel 4056 | Hytrel 5556 | PEBAX 4033 | PEBAX 5533 |
|---|---|---|---|---|
| Shore D Hardness ASTM D2240 | 40 | 55 | 40 | 55 |
| Melt Index ASTM D1228 (g/10 min) | 5 | 7 | | |
| Melt point ASTM DSC Peak (°C) | 150 | 203 | 160 | 159 |
| Heat Deflection Temp., 66 psi D648 (°C) | 54 | 90 | 56 | 72 |
| Tensile strength ASTM D638 (psi) | 3,625 | 5,500 | 5,200 | 6,380 |
| Ultimate Elong. ASTM D638 (%) | 450 | 450 | 390 | 455 |
| Stress at Yield ASTM D638 (psi) | 1,025 | 2,175 | | |
| Stress at 5% strain ASTM D638 (psi) | 400 | 950 | | |
| Stress at 10% strain ASTM D638 (psi) | 575 | 1,500 | | |
| Flexural Modulus ASTM D790 (psi) | 7,250 | 29,700 | | |

Accordingly, a blend of polymers having properties similar the Hytrel 5556 and Hytrel 4056 or similar to the PEBAX 4053 and PEBAX 5533 may be used, with the most important properties being the melt index, heat deflection temperature and the melting point. In addition, ultimate extension, stress at low strain and flexural modulus are also important. In particular, the melting point of the polymer blend is such that the blend is meltable in the embossing process, but not in the vacuum forming process. Thus, for example, to enable good adhesion of a coating layer of a thermoplastic embossing film composition on a substrate such as Tedlar®, a thermoplastic film composition of the invention should soften sufficiently to form embossed laminates at temperatures within a range of from about 280°F to 360°F. To enable application of a formed decorative laminate to an aircraft interior such as by a vacuum-forming process, the thermoplastic embossing coating layer of the formed decorative laminate should soften sufficiently to be formable into the desired panel shape at temperatures of about 250°F to 270°F, yet not soften to such a degree as to lose the embossed appearance at such temperatures. Compositions that have softening points below these temperatures can be unsuitable as the image embossed in the decorative laminate can degrade upon exposure to the elevated temperatures attendant to a vacuum-forming application process. As used herein, the term "softening point" refers to the temperature at which a composition first shows signs of flow by mechanical deformation such as by TMA (thermo mechanical analysis).

We have found that materials having melting points (ASTM DSC peak) in the range of about 310°F to about 400°F, preferably about 320°F to about 350°F provide suitable ability to acquire embossed texture under embossing conditions, and retain the embossing through thermoforming processes carried out at up to 275°F. Preferably the embossing materials have heat deflection temperatures at 66 psi (ASTM D648) of about 135°F to about 200°F, more preferably from about 140°F to about 160°F. Where the embossing materials are blends of two or more thermoplastic materials, an estimated composite melting point and heat deflection temperature may be calculated by averaging the melting point or heat deflection temperature of the components in accordance with their weight percentage in the composition. Thus, for example, in a composition containing 60% Hytrel 4056 (m. p. 302°F, Heat Deflection Temperature 129°F) and 40% Hytrel 5556 (m.p. 397°F, H.D. Temp. 195°F) the blend melting range would be centered about 340°F, and the blend heat deflection temperature range would be centered about 155°F. While these composite temperatures do not necessarily correspond to the actual final melting point or heat deflection temperature of the blend, they are useful as approximations for determining the types and amounts of thermoplastic materials to be used, in accordance with the preferred ranges outlined above.

In addition, a fire retardant blend may be added to the above composition so that the laminates meet and exceed FAA standards in terms of heat release and smoke density during combustion. The fire retardant blend may be mixed with the thermoplastic embossing composition in a high sheer mixing device, for example, a twin screw extruder, a compounding extruder or a batch mixer. The preferred fire retardant blend comprises generally zinc borate, decabromodiphenyl oxide, and another halogenated compound which melts at a higher temperature than the resins contained in the embossing film. The other halogenated compound is characterized in that it has a melting point such that it is meltable in the extrusion process, but solid in the vacuum forming process. This is important, in that it lowers the viscosity of the melt blend in the extrusion process while maintaining stiffness in the solid form during the vacuum forming process. Two such compounds are Great Lakes BC52 (a tetrabromobisphenol A polycarbonate) and Great Lakes DE79 (Octobromodiphenyl Oxide). If lower temperatures are used in compounding and extruding the film, such as temperatures below approximately 410°F, aluminum trihydrate may be used as an alternative to the zinc borate.

Because some polymer blends may not bond well to Tedlar® in the embossing process, a curing primer may be used to aid in bonding the blend to the Tedlar®. The primer is generally used by coating the Tedlar® layer with the primer. It has been found that in addition to enhancing the adhesion of the blend to the support film, the primer also increases the retention of the embossing texture during the vacuum forming process. Preferably, the primer is a blend of phenoxy resin and a polyurethane and a blocked or free isocyanate. As the blend of phenoxy resin and polyurethane, Bostik S943-34, for example, may be used as the polyurethane. As the blend of polyurethane and the blocked or free isocyanate, Bayer's LS2800 or BL3175, for example, may be used. Additionally, a soluble fire retardant agent, as described above, may be added to the primer to further reduce flammability and heat release values.

Preferably, the embossing films of the present invention are generally manufactured as follows: the thermoplastic polymer or blend of polymers is thoroughly mixed in a high shear mixer, preferably in a twin screw extruder, to which a fire retardant blend is added. Alternative blending methods, for example, compounding extruders, batch mixers or kneaders, such as a Buss kneader, may be used. Preferably, the polymer blend is loaded with about 60-70% fire retardant blend. This process typically forms pellets, which are then processed into thermoplastic films. However, film extrusion directly from the compounding extruder is an alternative. A support layer, such as Tedlar or Kynar, is then placed on an embossing plate. The support layer may optionally be coated with a curing primer, such as that described above. The embossing film is next layered over the primed or un-primed support sheet. The embossing film sheet may have a layer of release paper over it, which would be removed prior to vacuum forming. The sandwich of materials may then be pressed in a multi-opening press and pressed at about 100 psi and about 280-360°F for up to four minutes. Please see U.S. Patent No. 4,788,091.

Alternatively, a continuous embossing and lamination process may be carried out in forming the decorative laminate. The phrase continuous process or method for formation of a decorative laminate as used herein refers to a process for both laminating and embossing moving (i.e., non-stationary) sheets or webs of materials.

A suitable continuous process embossing and lamination can be conducted by passing a support film, such as a Tedlar® sheet or web, with an optional layer of primer coated thereon together with a sheet of the embossing film of the present invention through a heated nip and embossing roller to effect lamination and embossing of the materials.

For example, as shown in FIG. 1, the support film 1, either primed or unprimed, may be fed from a support film roll 2 and the embossing film 3 of the present invention may similarly be fed from an embossing film roll 4. The support film 1 and embossing film 3 are advanced to form a layer of materials, with the support film 1 forming the first layer and the embossing film 3 forming a layer over the support film. If a primer is used, the primer would form a layer in between the support film 1 and the embossing film 3. Additionally, release paper 6 may be layered on top of the embossing film 3. The layer of materials is then advanced together through a heated nip or stack 5 to effect lamination of the embossing film 3 to the support film 1.

The heated nip or stack 5, is generally composed of two rollers wherein at least one roller is heated to a temperature sufficient to soften the thermoplastic films. For example, a roller heated to about 300°F or greater should be sufficient to effect lamination and embossing. Application of the heated nip or stack 5 to the coated support film under conditions of pressure and elevated temperatures will laminate the embossing film 3 directly onto the web or sheet of the support film. The rolls of the nip or stack 5 are suitably of steel construction, preferably coated with a nonstick material such as Teflon® or silicone rubber, to avoid adherence of the materials during the lamination and embossing process.

If release paper 6 is used, the release paper 6 is removed on a paper take-up roll 7, following the lamination in the heated nip or stack 5.

From the heated nip 5, the laminated layered materials 10 are advanced continuously through a texturing system, e.g. a plurality of rollers, such as a nip formed by an embossing roller 8, having a textured surface with a back-up roll 13. Preferably, the back-up roll 13 has a surface of rubber, e.g. silicone rubber to assist in the embossment of the laminated layered materials 10. Preferably, the layered materials 10 may first be pre-heated to approximately 200-300°F by, for example infrared heaters 11. Alternatively, a simultaneous lamination and embossing procedure may be carried out by feeding the support film 1, primed or unprimed, from a support film roll 2 and feeding the embossing film 3 from a embossing film roll 4 directly to the texturing system, e.g. a plurality of rollers, such as a nip formed by an embossing roller 8, having a textured surface with a back-up roll 13, without first passing the support film 1 and the embossing film through the heated nip 5. The thus formed decorative laminate may be cooled and stored, for example, by passing it over a chilled roll 14 and onto a decorative laminate take-up roll 15.

To form a "double" decorative laminate, as is sometimes employed in passenger aircraft interiors, a second sheet or web of support film 9, such as Tedlar® or Kynar®, can be applied on top of the embossing film layer 3 of the layered materials 10, preferably following passage of the materials through the heated nip 5. To assist in the embossing and lamination process, the layered materials 10 may first be pre-heated to approximately 200-300°F by, for example infrared heaters 11. The second sheet or web of support film 9 may be advanced from a second support sheet roll 12 to form a layer over the embossing film layer 3. The layered materials are then advanced continuously through a lamination and embossing system, e.g. by a plurality of rollers, such as the nip formed by embossing roller 8 and back-up roll 13. The thus formed "double" decorative laminate may be cooled and stored, for example, by passing it over a chilled roll 14 and onto a decorative laminate take-up roll 15.

The decorative laminate, having the embossed pattern imprinted in it, is then placed on the interior surface to be covered. A vacuum forming process is then carried out in which the film is exposed to temperatures of up to about 280°F for approximately one to twenty minutes.

All documents mentioned herein are fully incorporated by reference. The following non-limiting examples are illustrative of the invention.

### EXAMPLE 1

A variety of thermoplastic embossing films were made using varying ratios of Hytrel 5556 and Hytrel 4056 and various ratios of PEBAX 5533 and PEBAX 4033. Two different fire retardant packages were added to the embossing film composition.

### Fire Retardant Package # 1:

Firebrake ZB (Zinc Borate), Decabromodiphenyl Oxide, Great Lakes BC52 (a tetrabromobisphenol A polycarbonate) and Antimony Oxide.

### Fire Retardant Package #2:

Firebrake ZB (Zinc Borate), Decabromodiphenyl Oxide, Great Lakes DE 79 (Octobromodiphenyl Oxide), and Antimony Oxide.

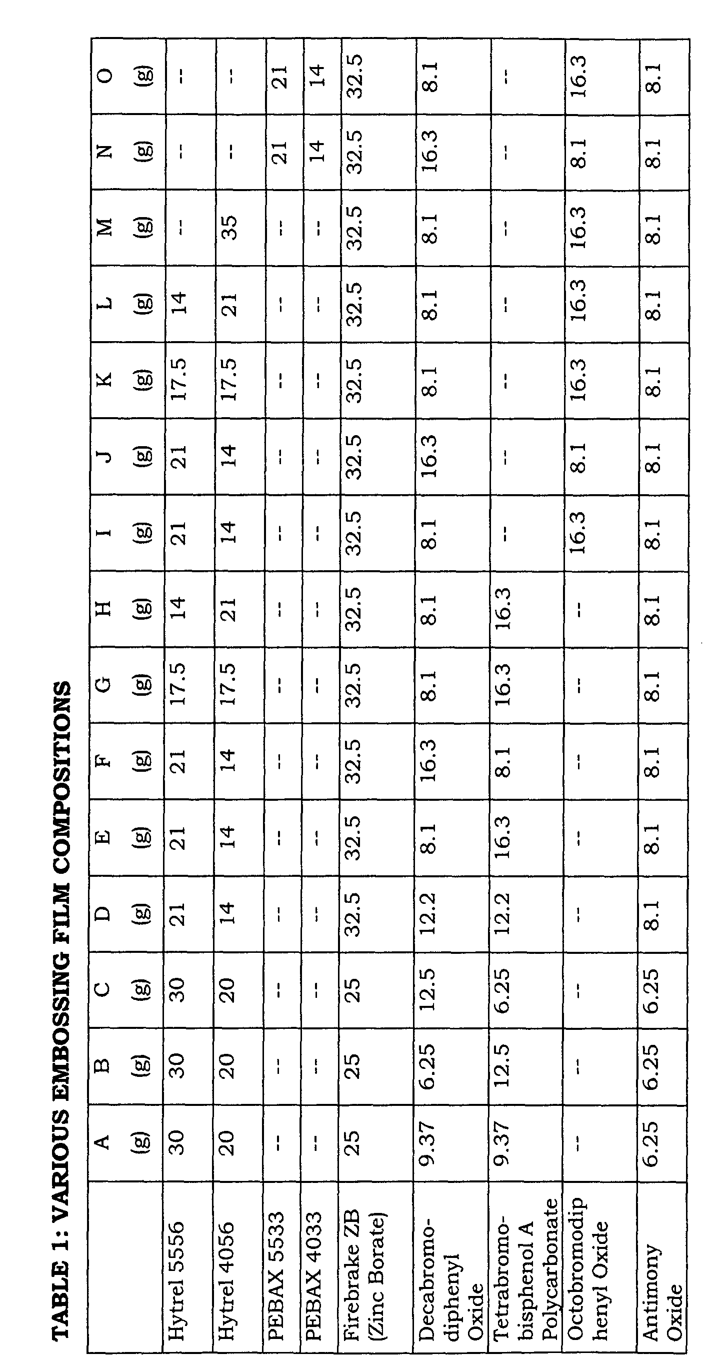

### EXAMPLE 2

Each composition set forth in Example 1 was melt compounded and extruded into film at temperatures of approximately 350°F to 470°F and subsequently laminated and embossed at pressures of about 100 psi and temperatures of about 350°F and vacuum forming processes wherein the composition is exposed to temperatures of up to about 280°F, and analyzed for embossing quality and embossing retention in the vacuum forming process:

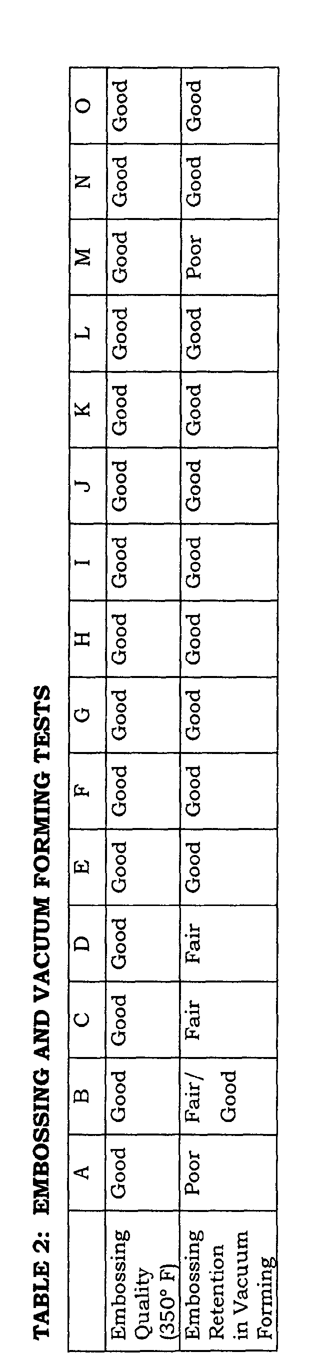

While each composition produces good embossing qualities, Compositions A, B, C and D were only Fair to Fair/Good in embossing retention. Composition M, containing pure Hytrel 4056 exhibited poor embossing retention, which would be improved by addition of about 10 to 50% of Hytrel 5556, depending on the fire retardant package used. A, B and C did not contain enough fire retardant package to increase the viscosity at emboss conditions and hold the emboss pattern. C contained too much of the low melting fire retardant which also lowered the viscosity at embossing conditions

### EXAMPLE 3

Three samples of each of the laminates in Example 2 were then analyzed to see whether they meet the standards set by the FAA in Regulation FAR 25.853 for heat release rate and smoke density

The Ohio State University (OSU) test was conducted to determine heat release values. Under the OSU test, samples of the laminate are hung vertically and the decorative surface is exposed to a heat release device that emulates the radiant heat present in a post-crash environment. The FAA standards require a peak heat release of 65 kilowatts per square meter. Thus, samples with heat release values exceeding 65 result in a fail. Also, the Smoke Density (Density @ Max) values were measured and compared to the FAA Smoke density maximum value of 200, wherein values exceeding 200 result in a fail.

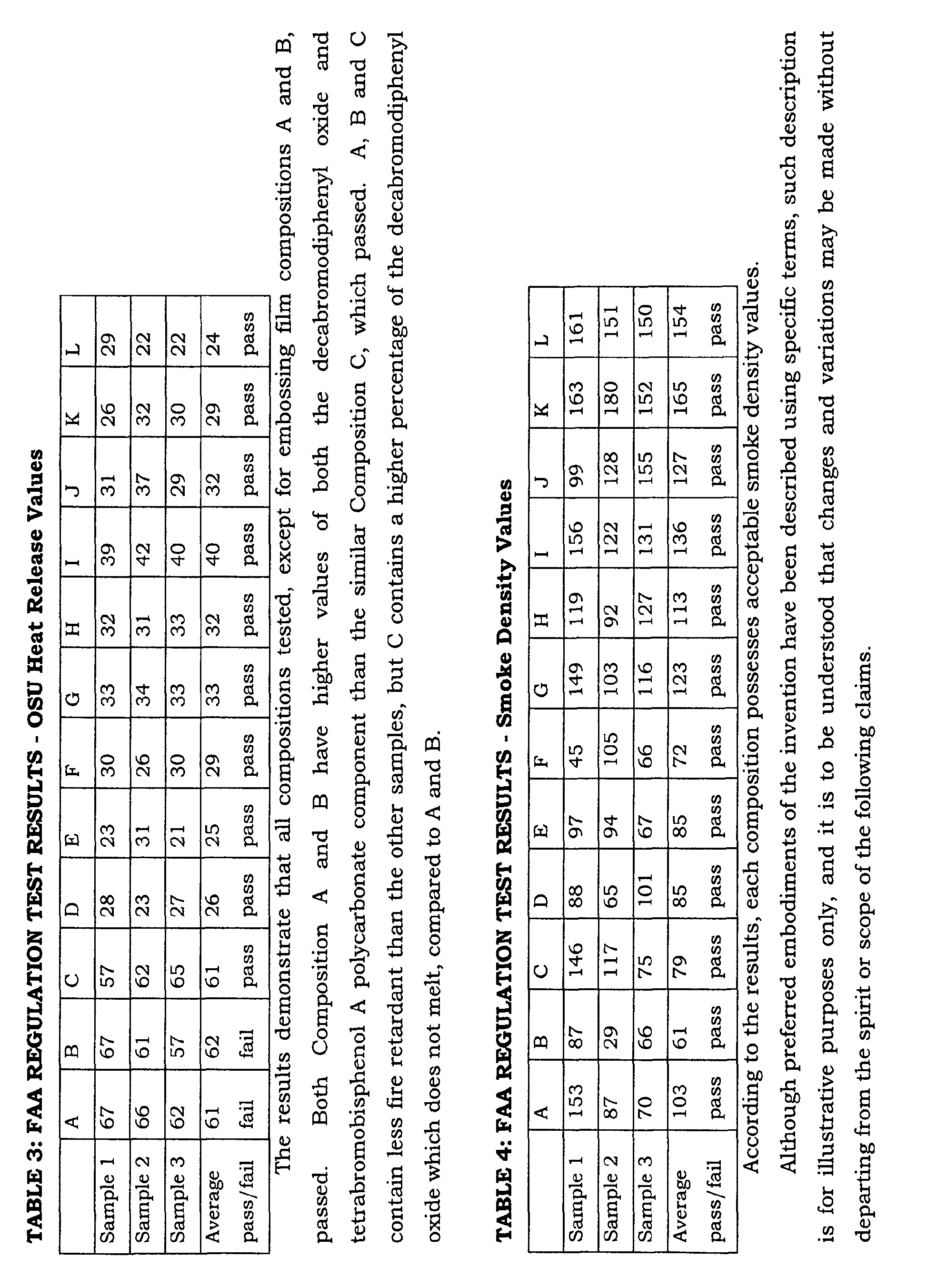

## Claims

1. An embossing composition suitable for forming a decorative laminate comprising at least one thermoplastic resin, which embossing composition conforms and bonds to a textured substrate at pressures of about 100 psi and temperatures of about 280-360°F in under 15 minutes, and which the embossing composition retains the shape of the textured substrate when exposed to vacuum forming at temperatures of up to about 280°F.

2. The embossing composition of claim 1, wherein the blend of thermoplastic resins comprises one or more of the following:
polyesters, polyamides, polyurethanes, polyvinylchlorides (PVC), acrylics, polyvinylidene chloride, polycarbonates and polyoxymethylenes.

3. The embossing composition of claim 1, wherein the composition comprises a blend of thermoplastic resins.

4. The embossing composition of claim 3, wherein the blend comprises Hytrel 5556 and Hytrel 4056.

5. The embossing composition of claim 4, wherein the blend comprises about 10% to about 85% Hytrel 5556 and about 15% to about 90% Hytrel 4056.

6. The embossing composition of claim 3, wherein the blend comprises PEBAX 5533 and PEBAX 4053.

7. The embossing composition of claim 6, wherein the blend comprises about 10% to about 85% PEBAX 5533 and about 15% to about 90% PEBAX 4053.

8. The embossing composition of claim 1 further comprising a fire retardant material or blend.

9. The embossing composition of claim 8, wherein the retardant material or blend is selected from zinc borate, decabromodiphenyl oxide, Great Lakes BC52, Great Lakes DE79 and aluminum trihydrate

10. A method for forming an embossed laminate, particularly useful for coating of aircraft interiors, comprising:
applying a layer of the embossing film composition of claim 1 to a support layer; and
laminating and embossing the support layer and film composition at pressures up to about 100 psi and temperatures in the range of about 280-360°F for less than 15 minutes.

11. The method of claim 10, wherein the laminating and embossing step is less than 10 minutes.

12. The method of claim 10, wherein the laminating and embossing step is less than 5 minutes.

13. The method of claim 10, wherein the laminating and embossing step is up to about 2 minutes.

14. The method of claim 10, wherein the laminating and embossing step are carried out in a batch process.

15. The method of claim 10, wherein the laminating and embossing step are carried out in a continuous process.

16. A sandwich of materials for forming a decorative laminate comprising:
a textured embossing substrate;
a support layer; and
an embossing composition comprising a thermoplastic resin that softens at pressures of about 100 psi and temperatures of about 280-360°F to conform to the textured embossing substrate and bond to the support layer in under 15 minutes, and which retains the textured embossing at temperatures of up to about 280°F.

17. The sandwich of claim 16 further including a primer layer between the support layer and the embossing composition.

18. The sandwich of claim 17, wherein the primer layer is a blend of phenoxy resin and a polyurethane and a blocked or free isocyanate.

19. The sandwich of claim 17, wherein the support layer is Tedlar®.

20. The sandwich of claim 17, wherein the support layer is Kynar®.

21. The sandwich of claim 17, wherein the support layer is PVC.
